# EUROPEAN PATENT APPLICATION

(11) **EP 4 079 661 A1**
(43) Date of publication of application: **26.10.2022**
(21) Application number: 21169906.1
(22) Date of filing: 22.04.2021
(51) Int. Cl.: B65G 17/06

(54) **CONVEYOR SYSTEM UNIT AND ENDLESS CONVEYOR SYSTEM**

(71) Applicant: Metso Outotec Finland Oy, 331 01 Tampere (FI)
(72) Inventor: GRÖNVALL, Lars, 231 31 Trelleborg (SE)
(74) Representative: AWA Sweden AB

(57) **Abstract**

A conveyor system unit (10) configured to form part of an endless conveyor system (50) is disclosed. According to the disclosure, each conveyor system unit (10) comprises a pair of slats (11, 12), each slat having a carrying surface (13) with a first and a second long side edge portion (21, 22) and two short side edge portions (23), and at each short side edge portion (23) a side wall (24) is arranged. In the conveyor system unit (10) the pair of slats (11, 12) are arranged side by side with a first long side edge portion (21) of the first slat (11) facing a second long side edge portion (22) of the second slat (12), and the pair of slats (11, 12) are interconnected by an elastomeric matrix (30) extending across the carrying surfaces (13) and two opposing side walls (24) of the first and second slats (11, 12). The elastomeric matrix (30) further comprises a connecting portion (31) extending between the pair of slats (11, 12) and side walls (24) thereby forming a continuous carrying surface (13) and side walls (24) of the conveyor system unit (10), wherein the connecting portion (31) forms a hinged connection between the pair of slats (11, 12) and side walls (24), and wherein the elastomeric matrix (30) is fastened to the pair of slats (11, 12) and to the side walls (24). An endless conveyor system (50) is also disclosed.

## Description

### FIELD OF THE DISCLOSURE

The present disclosure relates to a conveyor system unit configured to form part of an endless conveyor system as well as to an endless conveyor system comprising a pair of endless chains and a plurality of the conveyor system units.

### BACKGROUND

Within the mining industry there are different feeder options available for transporting mining material from one equipment type to another. For heavy duty applications apron feeders are often used. The apron feeders include steel feeder pans that are supported and driven by track chains. Where significant fines are present and/or height of transfer is critical, a belt feeder might be a better choice.

Conveyor belt feeders connected to steel supporting crossbars driven by track chains are also known, and when used for transporting ore material, such an arrangement can prevent leakage of fine material or possible liquid through the conveying surface. However, the belt surface of conveyer belt feeders wears and can become ripped or punctured by larger rocks, and replacement of a worn belt can be time consuming and difficult.

### SUMMARY

An object of the disclosure is to provide an improved conveyor system unit and an improved endless conveyor system comprising a plurality of such conveyor system units.

According to a first aspect of the disclosure, these and other objects are achieved, in full or at least in part, by a conveyor system unit configured to form part of an endless conveyor system. According to this aspect of the disclosure, each conveyor system unit comprises a pair of slats, each slat having a carrying surface with a first and a second long side edge portion and two short side edge portions, and at each short side edge portion a side wall is arranged. The pair of slats are arranged side by side with a first long side edge portion of the first slat facing a second long side edge portion of the second slat. Further the pair of slats are interconnected by an elastomeric matrix extending across the carrying surfaces and opposing side walls of the first and second slats. The elastomeric matrix further comprises a connecting portion extending between the pair of slats and side walls, thereby forming a continuous carrying surface and side walls of the conveyor system unit, wherein the connecting portion forms a hinged connection between the pair of slats and side walls, and wherein the elastomeric matrix is fastened to the pair of slats and side walls.

With such conveyor system units, individual conveyor system units may be replaced independently of each other upon rupture, wear, or other affects, like chemical contamination. With the possibility of independent replacement, the down time for the conveyor system during exchange is reduced. Further, these conveyor system units, when arranged into an endless conveyor system, enables use of scrapers also for the side walls, and not only for the carrying surface of the endless conveyor system.

According to an embodiment, each side wall has a support member, wherein the pair of slats are configured to be mounted to a pair of endless chains by a support member on a side wall on the first slat connecting to a first chain link and a support member on a side wall on the second slat connecting to a consecutive chain link in the endless chain. Thus, each conveyor system unit is configured to be arranged to bridge over a pivotable joint in the chain link, and the connecting portion between the pair of slats allows such pivot movement when the endless system travels over one of the pulley positions.

According to one embodiment, the connecting portion comprises a first connecting portion between a side wall portion of a side wall on the first slat and an opposite side wall portion of a side wall on the second slat. This first connecting portion is a foldable and wedge shaped and has an acute angle facing the carrying surface, and forms part of the hinged connection between the pair of slats and side walls. When a plurality of conveyor system unit are arranged into an endless conveyor system, the wedge shaped first connecting portion will, between the pulley positions, be folded together between the opposing side wall portions of the first and second slats, and will, when traveling over the pulleys, be stretched between the opposing side wall portions on side walls on the first and second slat forming continuous flat side walls with the side walls on the first and second slats.

According to another embodiment, the connecting portion comprises a second connecting portion between the long side edge portions of the first and second slats, which second connecting portion comprises a longitudinal extending recess, the longitudinal extending recess forming part of the hinged connection between the pair of slats and side walls. When a plurality of conveyor system unit is arranged into an endless conveyor system, the longitudinal extending recess in the second connecting portion will, in pulley position, enable a pivotable movement between the first and second slat, wherein the elastomeric matrix will be compressed to some extent. Such a longitudinal extending recess may be arced formed or have a triangular cross-section. Other geometrical cross-sections are also possible, as long as the longitudinal extending recess allows the two slats to be pivotably moved in relation to each other when passing a pulley position. The longitudinal extending recess is arranged in a surface opposite to the carrying surface of the conveyor system unit.

According to one embodiment, the first slat has a longitudinal extending protruding web along a second long side edge, and the second slat has a corresponding longitudinal extending recess along a first long side edge portion. Thus, when a plurality of conveyor system units are arranged side by side into an endless system on a pair of endless chains, with each conveyor system unit bridging the pivotable joint in the chain link, and a consecutive conveyor system unit being arranged with a first slat connected to the same chain link as the second slat of the preceding conveyor system unit, the longitudinal extending protruding web and corresponding longitudinal extending recess are aligned thereby forming a continuous carrying surface of the endless conveyor system.

In one embodiment, it is the elastomeric matrix, which has a longitudinal extending protruding web along a second long side edge portion of the first slat, and has a corresponding longitudinal extending recess along a first long side edge portion of the second slat.

Independently if the longitudinal extending web and longitudinal extending recess is arranged on the slats or in the elastomeric matrix, it will result in a continuous carrying surface when the conveyor systems units are arranged one after another as stated above into an endless conveyor system.

In another embodiment, the longitudinal extending protruding web may be formed in the elastomeric matrix, while the corresponding longitudinal extending recess is formed by the carrying surface of the slat in combination with an end surface of the elastomeric matrix not covering the carrying surface fully along a first long side edge portion of the second slat.

In another embodiment, a side wall on the first slat has a protruding web along a side wall portion, and a side wall on the second slat has a corresponding recess along a side wall portion.

In another embodiment, the elastomeric matrix has a protruding web along a side wall portion of the side wall on the first slat and has a corresponding recess along a side wall portion of a side wall on the second slat.

In another embodiment, the protruding web may be formed in elastomeric matrix along a side wall portion of the side wall on the first slat, while the corresponding recess is formed by a side wall portion of the side wall on the second slat in combination with an end surface of the elastomeric matrix not covering the side wall fully along a side wall portion of the second slat.

Again, independently if the web and recess is arranged on the sidewalls or in the elastomeric matrix on the side walls, it will result in a continuous wall surface when the conveyor system units are arranged one after another as stated above into an endless conveyor system.

In one embodiment, each conveyor system unit comprises a modular system. The modular system comprises a slat unit, two pairs of side walls and two elastomeric matrix side wall units.

The slat unit comprises a pair slats in form of T-shaped cross bars, wherein each upper flat portion of the T-shaped cross bars forms the carrying surface with a first and a second long side edge portion and two short side edge portions, wherein the pair of T-shaped cross bars are arranged side by side with a first long side edge portion of the first T-shaped cross bar facing a second long side edge portion of the second T-shaped cross bar. The pair of T-shaped cross bars are interconnected by an elastomeric matrix extending across the carrying surfaces of the pair of T-shaped cross bars forming a continuous carrying surface of the slat unit and forming a connecting portion between the pair of T-shaped cross bars, which connecting portion forms a hinged connection between the pair of T-shaped cross bars, and wherein the elastomeric matrix is fastened to the pair of T-shaped cross bars.

The two pairs of side walls are configured to be releasable attached to the short side edges of the T-shaped cross bars.

Concerning the two elastomeric matrix side wall units, each elastomeric matrix side wall unit comprises two elastomeric matrix side walls configured to cover and be releasable attached to two side walls configured to be arranged on the same side of the slat unit. The two elastomeric matrix side walls are interconnected by a first connecting portion being foldable and wedge shaped, and having an acute angle configured to be arranged facing the carrying surface of the slat unit. This first connecting portion forms a hinged connection between the elastomeric matrix side walls.

In one embodiment of this modular system, the connecting portion between the long side edge portions of the first and second T-shaped cross bars comprises a second connecting portion comprising a longitudinal extending recess, the longitudinal extending recess forming part of the hinged connection between the pair of T-shaped cross bars. This longitudinal extending recess is arranged in a surface opposite to the carrying surface of the slat unit.

Concerning the second connecting portion between the long side edge portions of the first and second T-shaped cross bars in form of a longitudinal extending recess, such a longitudinal extending recess may be arced formed or have a triangular cross-section. Other geometrical cross-sections are also possible, as long as the longitudinal extending recess allows the two T-shaped cross bars to be pivotably moved in relation to each other when passing a pulley position.

When the modular system is assembled into a conveyor system unit, the different features of the different embodiments disclosed above are equally applicable to this modular system. Thus, according to an embodiment of this modular system, each side wall has a support member, wherein the conveyor system unit is configured to be mounted to a pair of endless chains by a support member on a side wall attached to the first T-shaped cross bar is connected to a first chain link and a support member on a side wall attached to the second T-shaped cross bar is connected to a consecutive chain link in the endless chain. Thus, each conveyor system unit is configured to be arranged to bridge over a pivotable joint in the chain link, and the first and second connecting portions between the pair of T-shaped cross bars allows such pivot movement when the endless system travels over one of the pulley positions. Again, when a plurality of conveyor system units are arranged into an endless conveyor system, the wedge shaped first connecting portion will, between the pulley positions, be folded together between the opposing side wall portions on the side walls attached to the first and second T-shaped cross bars, and will, when traveling over the pulleys, be stretched between the opposing side wall portions of side walls attached to the first and second T-shaped cross bars forming a continuous side wall.

In line with the embodiments disclosed above, the polymer matrix on the slat unit or the T-shaped cross bars may have a longitudinal extending protruding web along a second long side edge portion of the first T-shaped crossbar, and may have a corresponding longitudinal extending recess along a first long side edge portion of the second T-shaped cross bar. Thus, when a plurality of modular conveyor system units are arranged side by side into an endless system on a pair of endless chains, with a modular conveyor system unit bridging the pivotable joint in the chain link, and a consecutive modular conveyor system unit being arranged with a support member of a side wall attached to the first T-shaped cross bar connected to the same chain link as a support member of a side wall attached to the second T-shaped cross bar of a preceding modular conveyor system unit, the longitudinal extending protruding web and corresponding longitudinal extending recess are aligned thereby form a continuous carrying surface of the endless conveyor system.

In another embodiment of the modular system, a first elastomeric matrix side wall of an elastomeric matrix side wall unit has a protruding web along a side wall portion, and a second elastomeric matrix side wall of that elastomeric matrix side wall unit has a corresponding recess along a side wall portion.

Again, when the modular conveyor system units are arranged one after the other on a pair of endless chains as discussed above, it will result in a continuous wall surface.

Alternative arrangements of the protruding webs and corresponding recesses according to earlier disclosed embodiments are also applicable to the modular system conveyor system unit.

In one embodiment, the support members are arranged on the side walls offset from the carrying surface of the conveyor system unit. With this position, the carrying surface is not aligned with the endless chains, and instead the carrying surface is arranged on a lower level in comparison with the endless chains in a carrying mode. Thus, when the endless conveyor system travels over the pulley, the point of rotation along the slates are lower than the point of rotation of the endless chains.

In one embodiment, the elastomeric matrix is selected from reinforced elastomeric material, rubber, polyurethane, or any other appropriate material that may withstand abrasion of the materials or goods to be carried by the conveyor system units.

In one embodiment, the elastomeric matrix is fastened to the pair of slats and to the side walls by vulcanization. In another embodiment, the elastomeric matrix is fastened to the pair of slats or to the pair of T-shaped cross bars by clamping.

However, in other embodiments, the elastomeric matrix may also be fastened by aid of melt bonding, adhesive, cold welding or by mechanical fastening, like screwing, bolting or by use of velcro. A combination of two or more of these fastening methods may also be used for each conveyor system unit.

According to a second aspect of the disclosure, these and other objects are also achieved, in full or at least in part, by an endless conveyor system comprising a pair of endless chains and a plurality of conveyor system units according to any one or combination of one or more of the above identified embodiments of the conveyor system units. According to this second aspect, the conveyor system units are arranged side by side to form an endless conveyor system, wherein a support member on a side wall on a first slat of a first conveyor system unit is connected to a first chain link of one of the endless chain, and a support member on a side wall on a second slat of the first conveyor system unit is connected to a consecutive second chain link in the endless chain. Further, a support member on a side wall on a first slat of a consecutive conveyor system unit is connected to a second chain link of the endless chain, and a support member on a side wall on a second slat of the consecutive conveyor system unit is connected to a consecutive third chain link in the endless chain.

Again, with such conveyor system units forming the endless conveyor system, individual conveyor system units may be replaced independently of each other upon rupture, wear, or other affects, like chemical contamination. With the possibility of independent replacement, the down time for the conveyor system during exchange is reduced. Further, such an endless conveyor system enables use of scrapers also for the side walls, and not only the carrying surface of the endless conveyor system. Even further, such an endless conveyor system is applicable for heavy duty applications and also for applications where there are significant fines present in the feed, as the structure thereof ensures minimal leakage and at the same time have a structure to allow heavy load.

According to one embodiment of this second aspect, a longitudinal extending protruding web along a long side edge portion of the first conveyor system unit is received in a longitudinal extending recess along a long side edge portion of the consecutive conveyor system unit, thereby forming a continuous carrying surface of the endless conveyor system.

According to another embodiment of this second aspect, a protruding web along a side wall portion of a side wall of the first conveyor system unit is received in a recess along a side wall portion of a side wall of the consecutive conveyor system unit, thereby forming a continuous wall surface of endless conveyor system.

According to one embodiment of this second aspect, the supporting members are arranged, on the outside of the side walls of each conveyor system unit, offset from the carrying surface of each conveyor system unit. With this position, the carrying surface is not aligned with the endless chains, and instead the carrying surface is arranged on a lower level in comparison with the endless chains in a carrying mode. Thus, when the endless conveyor system travels over the pulley, the point of rotation along the slates are lower than the point of rotation of the endless chains.

According to one embodiment of this second aspect, a load distributing plate is connected to and arranged to bridge over two support members arranged on a common chain link. Such a load distributing plate will ensure alignment of the two support members on the common chain link and will also distribute any uneven load on the carrying surfaces of the aligned two conveyor system units.

In one embodiment the load distributing plate is enforced with a ridge arranged in the chain link direction.

Other objectives, features and advantages of the present disclosure will appear from the following detailed disclosure, from the attached claims, as well as from the drawings. It is noted that the disclosure relates to all possible combinations of features.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise.

As used herein, the term "comprising" and variations of that term are not intended to exclude other additives, components, integers or steps.

### BRIEF DESCRIPTION OF THE DRAWINGS

The disclosure will be described in more detail with reference to the appended schematic drawings, which show examples of presently preferred embodiments of the disclosure.
Fig. 1a is a perspective view of one embodiment of a conveyor system unit according to the present disclosure.
Fig. 1b is a cross-sectional view of the embodiment shown in Fig. 1a.
Fig. 2 is a cross-sectional view of another embodiment of a conveyor system unit according to the present disclosure.
Fig. 3 is a cross-sectional view of another embodiment of a conveyor system unit according to the present disclosure.
Fig. 4 is a cross-sectional view of another embodiment of a conveyor system unit according to the present disclosure.
Fig. 5 is a perspective view of one embodiment of a conveyor system unit according to the present disclosure shown in a bent position like when passing the pulley position in an endless system arrangement.
Fig. 6 is a perspective view of a part of an endless system with three thereon arranged conveyor system units according to one embodiment of the present disclosure.
Fig. 7 is a perspective view of a part of an endless system with thereon arranged conveyor system units according to one embodiment of the present disclosure.
Fig. 8 is a perspective view of the endless system shown in Fig. 7 shown from another angle.
Fig. 9 is a perspective cross-sectional view of the endless system.
Fig. 10 is a perspective view of another embodiment of a conveyor system unit according to the present disclosure.
Fig. 11 is a cross-sectional view of the embodiment shown in Fig. 10.
Fig. 12a is a partly exploded view of the embodiment shown in Fig. 10, and Fig. 12b is an enlargement of one part of the embodiment shown in Fig. 10.
Fig. 13 is a perspective view of a part of an endless system with three thereon arranged conveyor system units according to the embodiment shown in Fig. 10.
Fig. 14 is a perspective view of a part of an endless system with thereon arranged conveyor system units.
Fig. 15 is a perspective view of the endless system shown in Fig. 14 shown from another angle.
Fig. 16 is a perspective cross-sectional view of the endless system of Fig. 14.

### DETAILED DESCRIPTION

The present disclosure will now be described more fully hereinafter with reference to the accompanying drawings, in which currently preferred embodiments of the disclosure are shown. The present disclosure may, however, be embodied in many different forms and should not be construed as limited to the embodiments set forth herein; rather, these embodiments are provided for thoroughness and completeness, and to fully convey the scope of the disclosure to the skilled addressee. Like reference characters refer to like elements throughout.

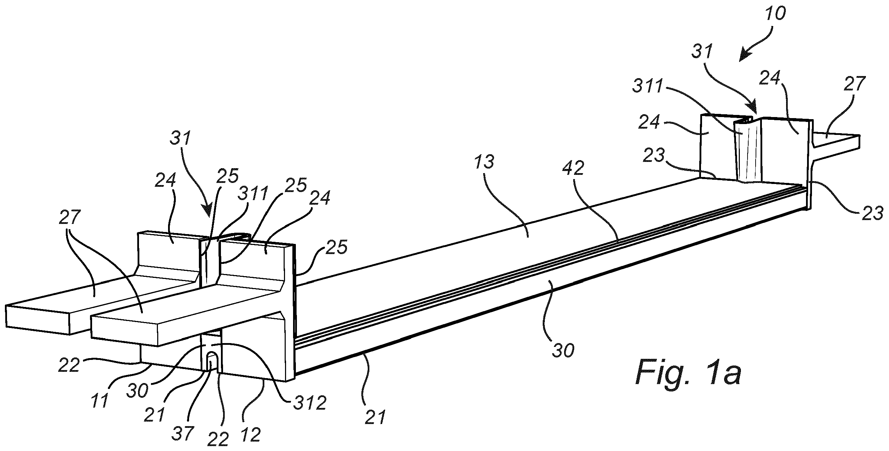

Figs. 1a-b show a conveyor system unit 10 according to one embodiment of the present disclosure, which conveyor system unit 10 is configured to form part of an endless conveyor system 50. The conveyor system unit 10 is shown in a flat configuration and comprises a pair of slats 11, 12. Each slat 11, 12 has a carrying surface 13 configured to carry the load of the endless conveyor system 50. The carrying surface 13 has a first long side edge portion 21, a second long side edge portion 22, and two short side edge portions 23. At each short side edge portion 23 a side wall 24 is arranged. Thus, each slat forms a longitudinally extending carrying surface 13, which carrying surface 13 is limited at each short side edge 23 by a side wall 24.

In the conveyor system unit 10, the pair of slats 11, 12 are arranged side by side with a first long side edge portion 21 of the first slat 11 facing a second long side edge portion 22 of the second slat 12, and the pair of slats 11, 12 are interconnected by an elastomeric matrix 30 extending across the carrying surfaces 13 and the two opposing side walls 24 of both the first slat 11 and the second slat 12. Thus, the elastomeric matrix 30 joins the two slats with side walls into a conveyor system unit 10. Between the pair of slats 11, 12 and the side walls 24, respectively, the elastomeric matrix 30 forms a connecting portion 31, which extends from the first slat 11 to the second slat 12 and from a side wall portion 25 of a side wall 24 of the first slat 11 to a side wall portion 25 of a side wall 24 of the second slat, forming a hinged connection between the two slats 11, 12 and side walls 24 thereof, respectively.

In this embodiment, the elastomeric matrix 30 is fastened onto the pair of slats 11, 12 and side walls 24 by vulcanization during manufacturing thereof. However, in other embodiments the elastomeric matrix may be fastened by aid of clamping, melt bonding, adhesive, cold welding or by mechanical fastening, like by screwing, by bolting or by use of velcro.

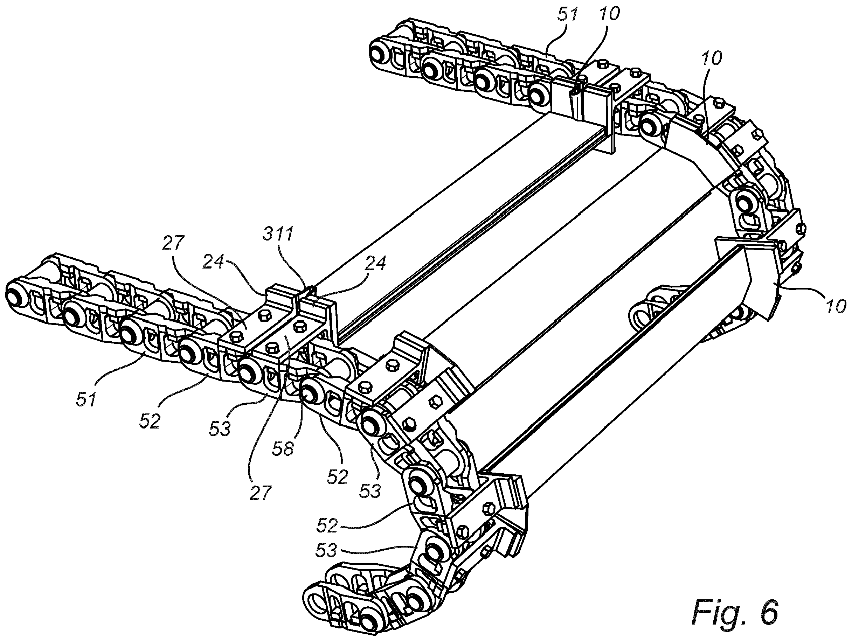

The side walls 24 have support members 27 arranged thereon, which support members 27 are arranged on a surface of the side walls 24 facing away from the carrying surface 13. These support members 27 are configured to be mounted to a pair of endless chains 51, as shown in e.g. Fig. 6, wherein a first support member 27 of the first slat 11 is connected to a first chain link 52 and a support member 27 of the second slat 12 is connected to a consecutive chain link 53 in the endless chain 51. The connecting portion 31 bridges over the pivot link 58 between the first and the second chain link 51, 52, and when the conveyor system units 10 reach a pulley position, the connecting portion 31 allows a pivot movement in the hinged connection. This is shown in more detail in Figs. 6-10.

In the embodiment shown in Fig. 1a, the connecting portion 31 comprises a first connecting portion 311, which comprises a flexible and foldable wedge shaped part, which is arranged between a side wall portion 25 on a side wall 24 on the first slat 11 and an opposite side wall portion 25 on a side wall on the second slat 12. The flexible and foldable wedged shaped part has an acute angle facing the carrying surface 13 of the conveyor system unit 10. When the conveyor system unit 10 travels along a flat part of the endless system conveyor path, then this first connecting portion 311 is folded together as shown in Fig. 1a, and when the conveyor system unit 10 reach the pulley position of the endless system conveyor path, the first connecting portion 311 is stretched to form a continuous wall with the side walls 24 on the slats 11, 12, as shown in Figs. 6-9.

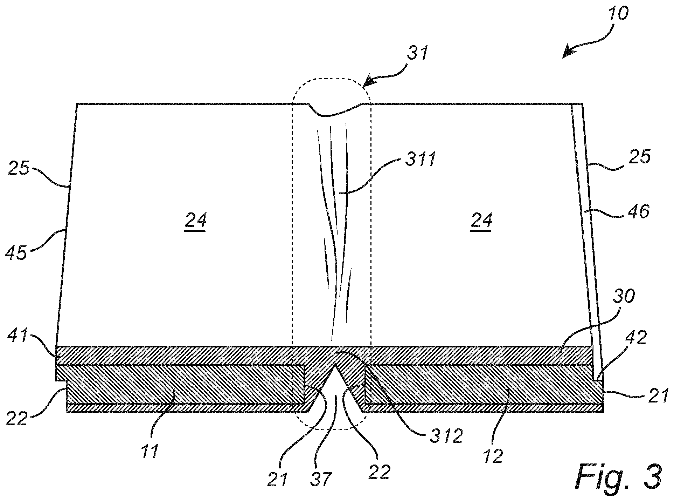

In the conveyor system unit 10 shown in Fig. 1a, the connecting portion 31 further comprises a second connecting portion 312, which second connecting portion 312 is arranged between the long side edge portions 21, 22 of the first and second slats 11, 12. This second connecting portion 312 comprises a longitudinal extending recess 37. In the embodiment shown in Fig. 1a, this longitudinal extending recess 37 is arranged as an arced longitudinal extending recess 37 in the elastomeric matrix 30 between the pair of slats 11, 12. However, this longitudinal extending recess 37 may have other forms also. In the embodiment shown in Fig. 3, the longitudinal extending recess 37 has a triangular cross-section. Other geometrical cross-sections are also possible, as long as the longitudinal extending recess 37 allows the two slats 11, 12 to be pivotably moved in relation to each other when passing the pulley position.

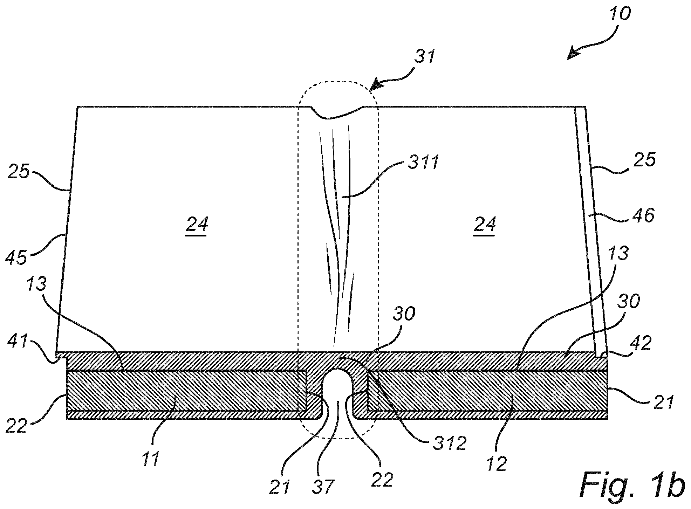

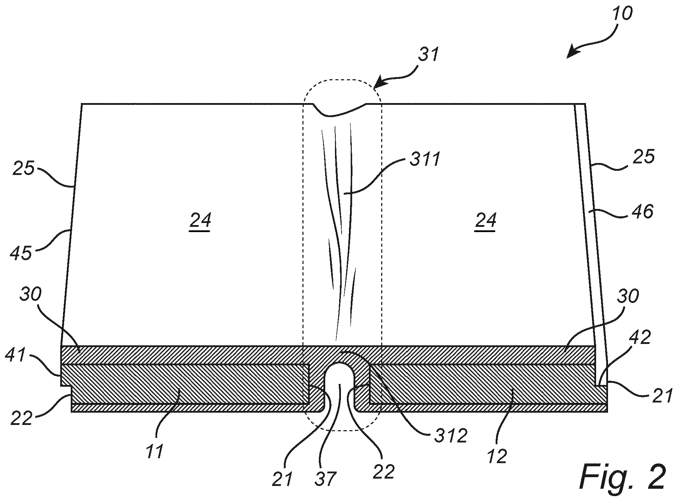

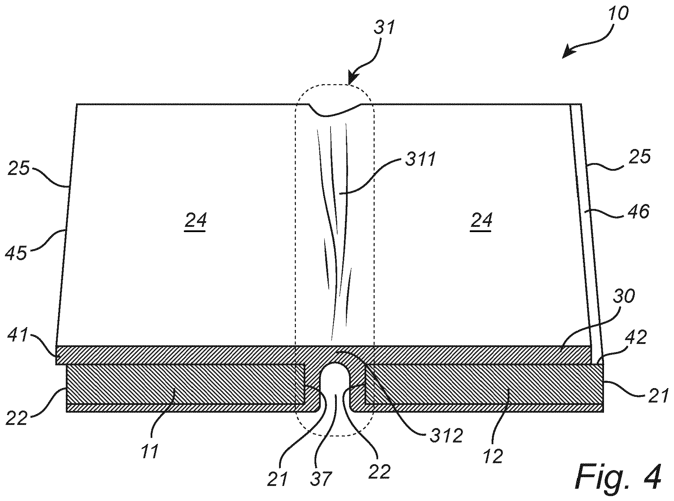

A cross-sectional view of the conveyor system unit 10 shown in Fig. 1a is disclosed in Fig. 1b. Fig. 1b further shows that the conveyor system unit 10 has a longitudinal extending protruding web 41 arranged on a second long side edge 22 of the first slat 11, and has a corresponding longitudinal extending recess 42 along a first long side edge portion 21 of the second slat 12. In the embedment of Fig. 1b the longitudinal extending protruding web 41 and the corresponding longitudinal extending recess 42 is formed in the elastomeric matrix 30. However, the longitudinal extending longitudinal extending protruding web 41 and the longitudinal extending corresponding recess 42 may in another embodiment be formed in the slats 11, 12 as shown in Fig. 2 and Fig. 3. In another embodiment, the longitudinal extending protruding web 41 may be formed in the elastomeric matrix 30, while the corresponding longitudinal extending recess 42 is formed by the carrying surface 13 of the slat 12 in combination with an end surface of the elastomeric matrix 30, not covering the carrying surface 13 fully along a first long side edge portion 21 of the second slat 12, as shown in Fig. 4.

The conveyor system unit 10 shown in Fig. 1a-b further has a protruding web 45 along a side wall portion 25 of a side wall 24 on a first slat 11, and a corresponding recess 46 along a side wall portion 25 of a side wall on the second slat 12. Again, the protruding web 45 and the corresponding recess 46 may be arranged in the elastomeric matrix 30 on the side walls 24 as shown in Fig. 1b, or may be arranged in the side wall 24 material, or may even comprise a protruding web 45 in the elastomeric matrix 30 and a corresponding recess 46 formed by a side wall 24 on the second slat 12 in combination with an end surface of the elastomeric matrix 30 on the side wall 24 not covering the side wall 24 fully towards the side wall portion 25 of the side wall 24.

Thus, when two conveyor system units 10 are arranged side by side on an endless chain 51, the protruding webs 41, 45 of a first conveyor system unit 10 will align the corresponding recesses 42, 46 of a consecutive conveyor system unit 10, and form continuous carrying surface 13 and wall surfaces for the endless conveyor system 50.

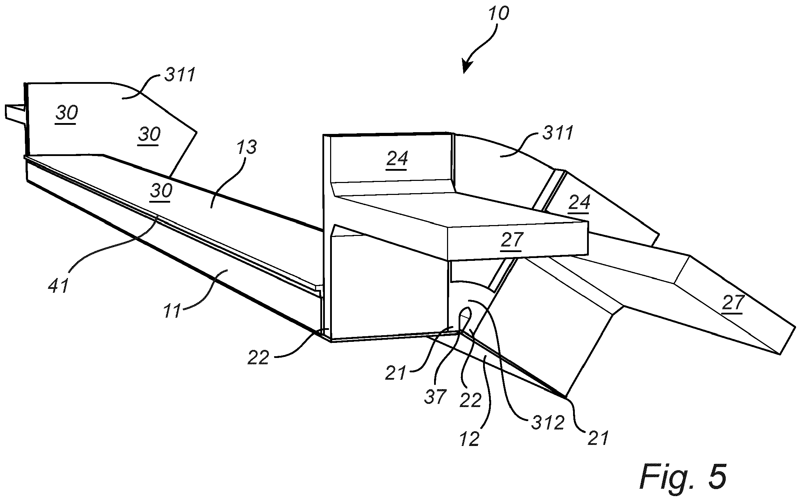

Fig. 5 is a perspective view of one embodiment of a conveyor system unit 10 of Fig. 1a shown in a bent position when like passing a pulley position in an endless system arrangement. As shown in Fig. 5, the first connecting portion 311 is now stretched out and forms a continuous smooth side wall together with the elastomeric matrix 30 on the side walls 24 of the slats 11, 12, while the second connecting portion 312 is bent like a hinge between the first and second slats 11, 12.

As shown in Fig. 6, in which three conveyor system units 10 have been arranged on a pair of endless chains 51 with space for intermediate conveyor system units 10, the first and second connecting portions 311, 312 are arranged to bridge over a pivot link 58 between two consecutive chain links 52, 53, and when the endless conveyor system 50 travels over the pulley position, each conveyor system unit 10 is bent between the first and second slats 11, 12.

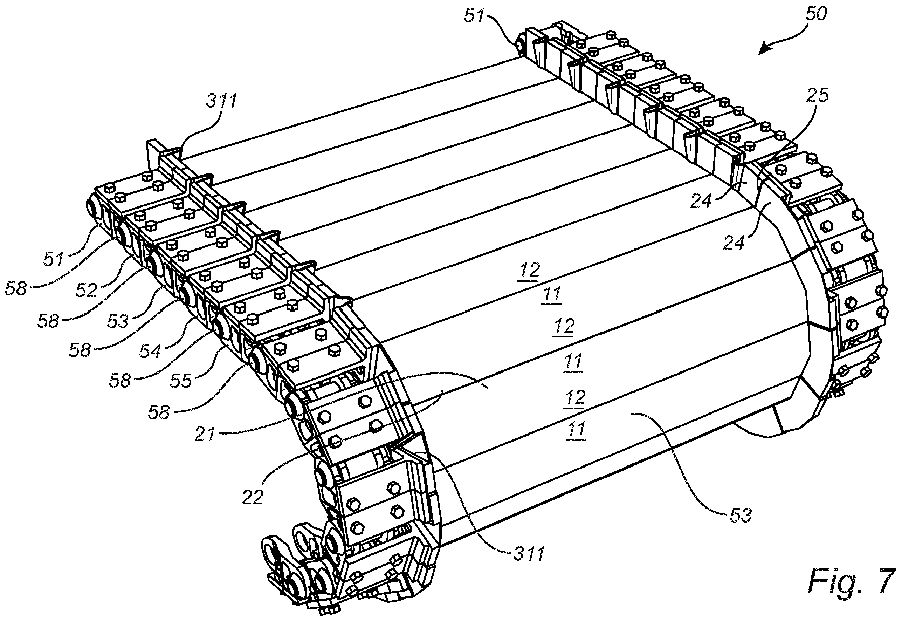

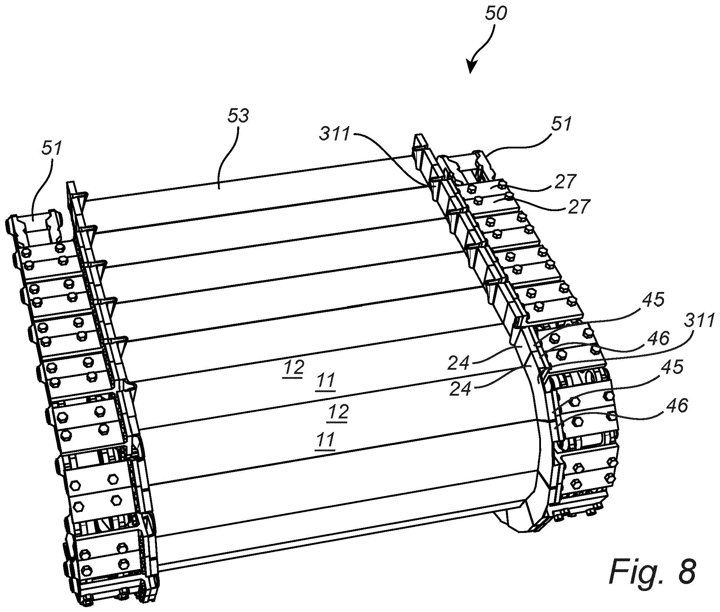

Figs. 7 and 8 show how multiple conveyor system units 10 are arranged one after the other on a pair of endless chains 51. Again, it is shown how first and second slats 11, 12, in each conveyor system unit 10, are pivoted in relation to each other when passing a pulley position, while the second long side edge portion 22 of the first slat 11 is align to a first long side edge portion 21 of a second conveyor system unit 10, wherein the longitudinal extending protruding web 41 of the first slat 11 is received in the corresponding longitudinal extending recess 42 to form a continuous carrying surface 13 of the elastomeric matrix 30, and the protruding web 45 along a side wall portion 25 of a side wall 24 of a second slat 12 is received in the corresponding recess along a side wall portion 25 of a side wall 24 of a first slat 11 to form a continuous side wall surface.

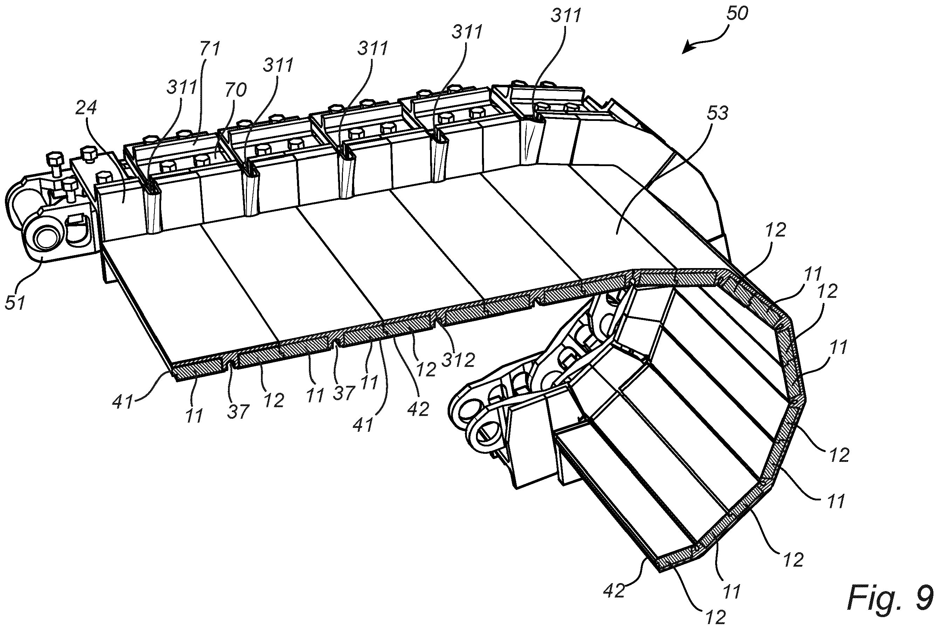

Fig. 9 is a perspective cross-sectional view of the endless system of Fig. 7 and 8, which show a longitudinal extending recess 42 arranged in the material matrix of the slat 11. The endless conveyor system 50 further has load distributing plates 70, which each is arranged to bridge over two support members 27 from two different conveyor system units arranged on a common chain link 52, 53, 54, 55. The load distributing plates 70 are fastened to the endless chains 51. Each load distributing plate 70 may further have an enforcement ridge 71 arranged in the chain link direction.

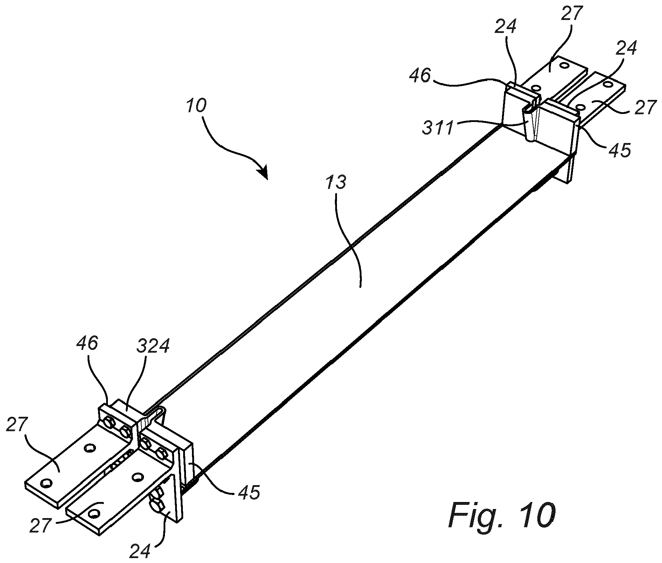

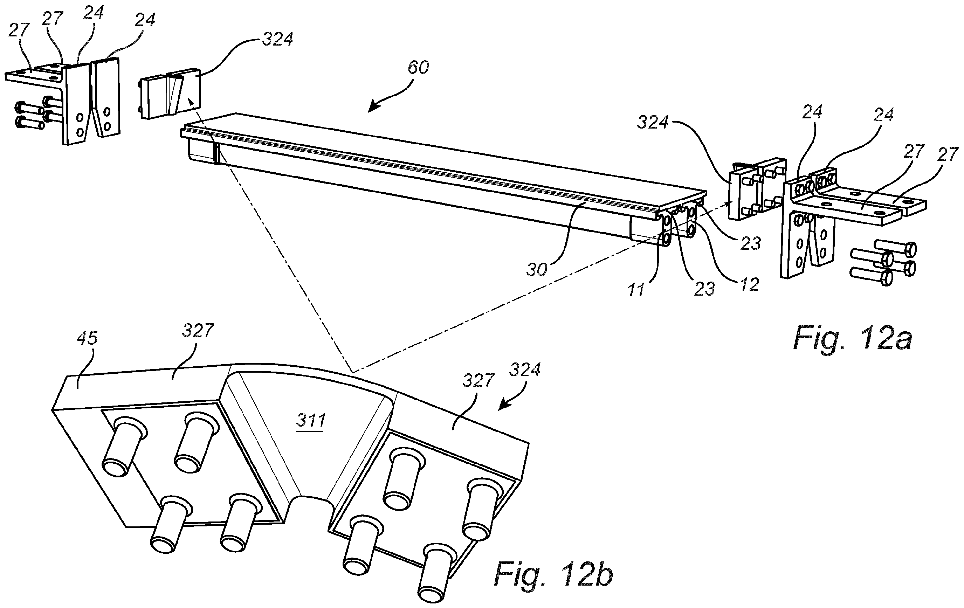

Figs. 10-16 show a conveyor system unit according to another embodiment of the present disclosure. In this embodiment the conveyor system unit 10, comprises a modular system. As shown in Fig. 12a, the modular system comprises a slat unit 60, two pair of side walls 24, and two elastomeric matrix side wall units 324.

The slat unit 60 comprises a pair of slats in form of two T-shaped cross bars 11, 12. Each upper flat portion of the T-shaped cross bars 11, 12 forms the carrying surface 13 with a first and a second long side edge portion 21, 22 and two short side edge portions 23. In the slat unit 60, the pair of T-shaped cross bars 11, 12 are arranged side by side with a first long side edge portion 21 of the first T-shaped cross bar 11 facing a second long side edge portion 22 of the second T-shaped cross bar 12, and the pair of T-shaped cross bars 11, 12 are interconnected by an elastomeric matrix 30 extending across the carrying surfaces 13 of the pair of T-shaped cross bars 11, 12. The elastomeric matrix 30 further forms a second connecting portion 312 between the pair of T-shaped cross bars 11, 12, which second connecting portion 312 comprises a longitudinal extending recess 37 forming a hinged connection between the pair of T-shaped cross bars 11, 12. As in the embodiments above, this recess may have an arced cross section or a triangular cross-section. Other geometrical cross-sections are also possible, as long as the longitudinal extending recess 37 allows the two T-shaped cross bars 11, 12 to be pivotably moved in relation to each other.

The two pairs of side walls 24 are configured to be releasable attached to the short side edges 23 of the T-shaped cross bars 11, 12, and especially to the vertical part of the T-shaped cross bars 11, 12. Further in this embodiment, the side walls 24 have support members 27 arranged thereon, which support members 27 are arranged on the side walls 24 on a surface configured to face away from the carrying surface 13 of the slat unit 60.

As shown in detail in Fig 12b, each elastomeric matrix side wall units 324 comprises two elastomeric matrix side walls 327 configured to cover and be releasable attached to two side walls 24, which side walls 24 are configured to be arranged on the same side of the slat unit 60. The elastomeric matrix side walls 327 are interconnected by a first connecting portion 311 being foldable and wedge shaped and having an acute angle configured to be arranged facing the carrying surface 13 of the slat unit 60. This first connecting portion 311 forms a hinged connection between the elastomeric matrix side walls 237.

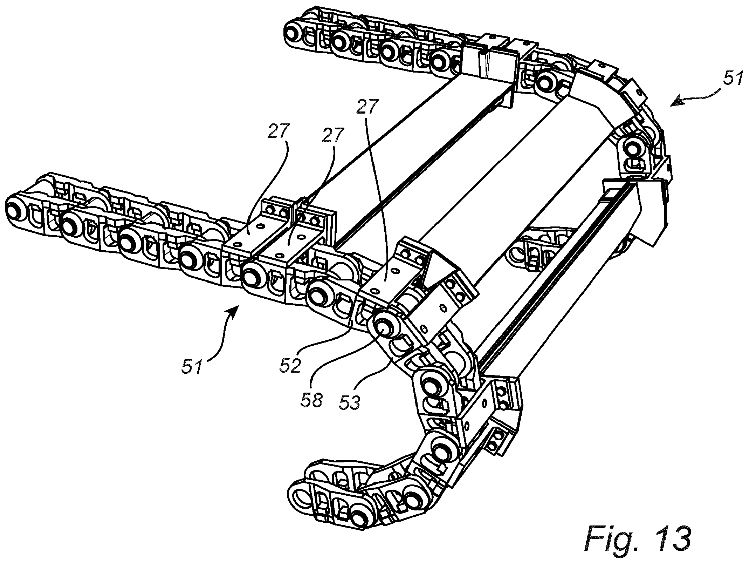

When the modular system is assembled into a conveyor system unit 10, it is used and assembled to a pair of endless chains 51 in the same way as the embodiments disclosed above. Thus, the support members 27 are mounted to a pair of endless chains 51, as shown in Fig. 13-15, wherein a first support member 27 of a side wall attached to the first T-shaped cross bar 11 is connected to a first chain link 52 and a support member 27 of a side wall attached to the second T-shaped cross bar 12 is connected to a consecutive chain link 53 in the endless chain. The first and second connecting portions 311, 312 of the conveyor system unit 10 bridges over the pivot link 58 between the first and the second chain link 51, 52, and when the conveyor system units 10 reach a pulley position, the first and second connecting portions 311, 312 allows a pivot movement in the hinged connection. This is shown in more detail in Figs. 13-16.

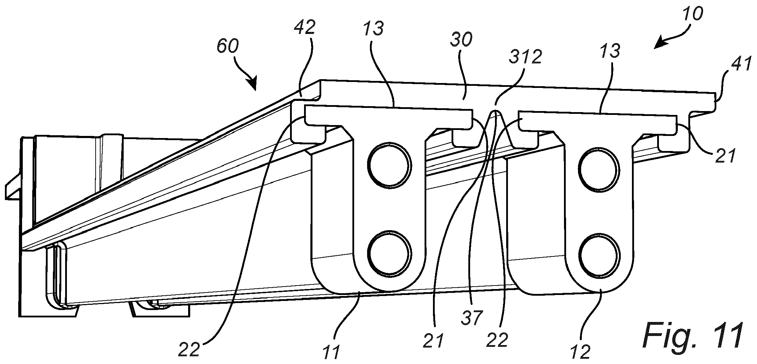

The cross-sectional view of the conveyor system unit 10 shown in Fig. 11 further shows that the conveyor system unit 10 has a longitudinal extending protruding web 41 arranged on a first long side edge 21 of the elastomeric matrix of the second T-shaped cross bar 12, and a corresponding longitudinal extending recess 42 along a second long side edge portion 22 of the first slat 11. In the embedment of Fig. 11 the longitudinal extending protruding web 41 and the corresponding longitudinal extending recess 42 is formed in the elastomeric matrix 30. Thus, when two conveyor system units 10 are arranged side by side on an endless chain 51, the longitudinal extending protruding webs 41, of a first conveyor system unit 10 will align the corresponding recesses 42 of a consecutive conveyor system unit 10, and form continuous carrying surface 13 for the endless conveyor system 50.

The elastomeric matrix side wall units 324 shown in Fig.12b seems not to have any protruding web 45 along a side wall portion of a first elastomeric matrix side wall 327, and no corresponding recess 46 along a side wall portion of a second elastomeric matrix side wall 327. However, when mounted to the side walls, it will form a protruding web 45 of the elastomeric matrix, and a corresponding recess 46 formed by a side wall surface and with an endsurface of the elastomeric matrix not covering the side wall 24 fully towards the side wall portion 25 of the side wall, as shown in Fig. 10.

However, alternative arrangements with a protruding web 45 and corresponding recess 46 according to earlier disclosed alternatives as disclosed in relation to in Figs. 1-4 are also possible for this modular version of the conveyor system unit 10.

In the embodiment shown in Figs. 11-16, the elastomeric matrix 30 is fastened onto the pair of T-shaped cross bars 11, 12 by having the elastomeric matrix 30 clamping around the long side edges 21, 22 of the slats 11, 12. However, it may also be fastened to the pair of T-shaped cross bars 11, 12 by vulcanization during manufacturing of the slat unit 60, while the elastomeric matrix side wall units 324 is fastened by mechanical fastening like screw, or screw and bolt arrangement to the side walls or by velcro.

As shown in Fig. 13, three conveyor system units 10 has been arranged on a pair of endless chains 51 with space for intermediate conveyor system units 10, the first and second connecting portions 311, 312 are arranged to bridge over a pivot link 58 between two consecutive chain links 52, 53, and when the endless conveyor system 50 travels over a pulley position, each conveyor system unit 10 is bent between the first and second T-shaped cross bar 11, 12.

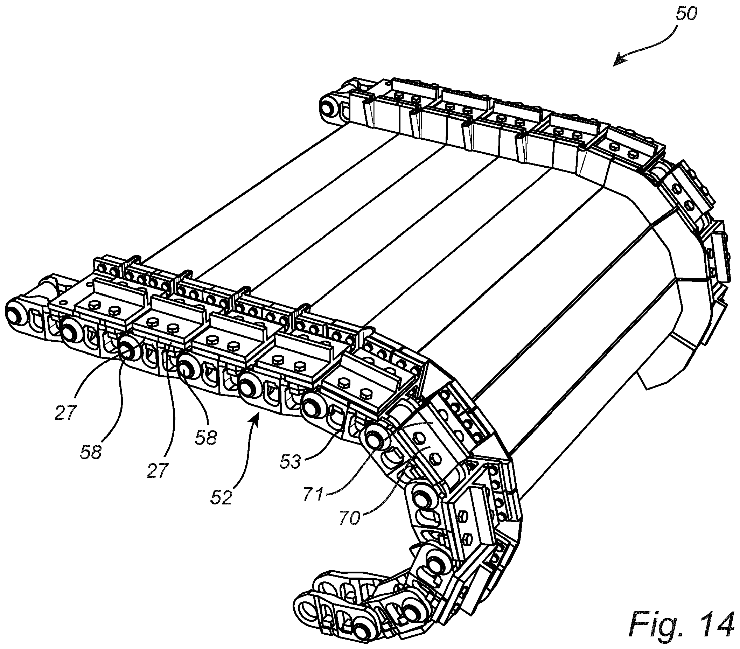

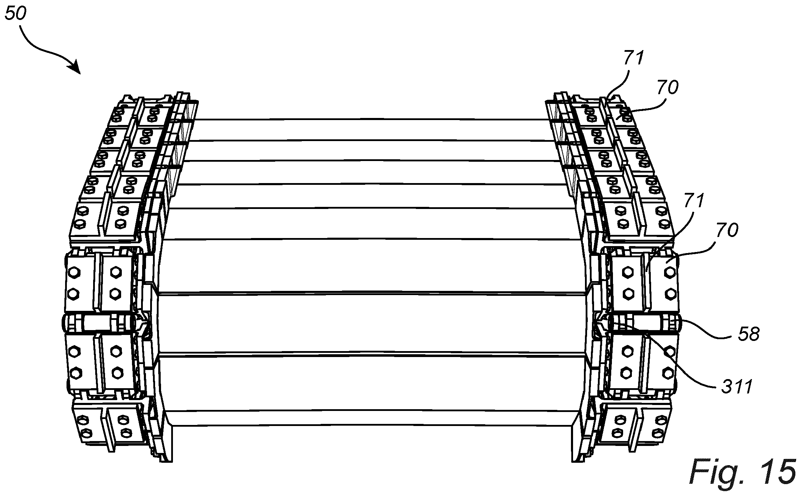

Figs. 14 and 15 show how multiple conveyor system units 10 are arranged one after the other on a pair of endless chains 51. Again, it is shown how first and second T-shaped cross bar 11, 12, in each conveyor system unit 10, are pivoted in relation to each other when passing the pulley position, while the second long side edge portion 22 of the first T-shaped cross bar 11 is align to a first long side edge portion 21 of a second T-shaped cross bar 12 in a second conveyor system unit 10. Again the protruding webs 41, 45 of one conveyor system unit 10 are received in the corresponding recesses 42, 46 in the consecutive conveyor system unit 10 to form a continuous carrying surface 13 of the elastomeric matrix 30, and a continuous elastomeric matrix wall surface (324).

The endless conveyor system 50 in figs. 13-15 further has load distributing plates 70, which each is arranged to bridge over two support members 27 from two different conveyor system units 10 arranged on a common chain link 52, 53, 54, 55. The load distributing plates 70 are fastened to the endless chains 51. Each load distributing plate 70 may further have an enforcement ridge 71 arranged in the chain link direction.

Fig. 16 is a perspective cross-sectional view of the endless conveyor system of Fig. 14 and 15, which show a longitudinal extending web 41 and a longitudinal extending recess 42 arranged in the elastomeric matrix 30 of the T-shaped cross bars 11, 12, respectively, and the longitudinal extending recess 37 forming part of the second hinged connection 312 between the two T-shaped cross bars 11, 12 in each conveyor system unit 10.

The skilled person realizes that several modifications of the embodiments described herein are possible without departing from the scope of the disclosure, which is defined in the appended claims.

For instance, the protruding webs 41, 45 of the second long side edge 22 and the side wall portion 25 of a side wall 24 on the first slat, and the corresponding recesses 42, 46 of the first long side edge 22 and the side wall portion 25 of a side wall 24 on the second slat 12, respectively, may be arranged the other way around or even differently for long side edges 21, 22; and side wall portions 25 of the side walls on the first and second slats 11, 12.

Further, the slats may have other cross-sectional profiles as long as such cross-sectional profile provide a carrying surface 13 and an end opposite the carrying surface allowing a pivot movement between the slats when passing a pulley position.

Below different items of the application are disclosed:
Item 1. A conveyor system unit (10) adapted to form part of an endless conveyor system (50), each conveyor system unit (10) comprising a pair of slats (11, 12), each slat having a carrying surface (13) with a first and a second long side edge portion (21, 22) and two short side edge portions (23), and at each short side edge portion (23) a side wall (24) is arranged, wherein
   the pair of slats (11, 12) are arranged side by side with a first long side edge portion (21) of the first slat (11) facing a second long side edge portion (22) of the second slat (12), and
   the pair of slats (11, 12) are interconnected by an elastomeric matrix (30) extending across the carrying surfaces (13) and opposing side walls (24) of the first and second slats (11, 12), and the elastomeric matrix (30) further comprising a connecting portion (31) extending between the pair of slats (11, 12) and side walls (24) thereby forming a continuous carrying surface (13) and side walls (24) of the conveyor system unit (10), wherein the connecting portion (31) forms a hinged connection between the pair of slats (11, 12) and side walls (24), and wherein the elastomeric matrix (30) is fastened to the pair of slats (11, 12) and to the side walls (24).
Item 2. A conveyor system unit (10) according to item 1, wherein each side wall (24) has a support member (27), wherein the pair of slats (11, 12) are adapted to be mounted to a pair of endless chains (51) by a support member (27) of a side wall on the first slat (11) connecting to a first chain link (52) and a support member (27) of a side wall on the second slat (12) connecting to a consecutive chain link (53) in the endless chain (51).
Item 3. A conveyor system unit (10) according to item 1 or item 2, wherein the connecting portion (31) comprises a first connecting portion (311) between a side wall portion (25) of a side wall (24) on the first slat (11) and an opposite side wall portion (25) of a side wall (24) on the second slat (12), wherein the first connection portion (311) being foldable and wedge shaped, and having an acute angle facing the carrying surface (13), and wherein the first connecting portion (311) forming part of the hinged connection between the pair of slats (11, 12) and side walls (24).
Item 4. A conveyor system unit (10) according to any one of preceding items, wherein the connecting portion (31) comprises a second connecting portion (312) between the long side edge portions (21, 22) of the first and second slats (11, 12), which second connecting portion (312) comprises a longitudinal extending recess (37), the longitudinal extending recess (37) forming part of the hinged connection between the pair of slats (11, 12) and side walls (24).
Item 5. A conveyor system unit (10) according to any one of items 1-4, wherein the elastomeric matrix (30) has a longitudinal extending protruding web (41) along a second long side edge portion (22) of the first slat (11), and has a corresponding longitudinal extending recess (42) along a first long side edge portion (21) of the second slat (12).
Item 6. A conveyor system unit (10) according to any one of preceding items, wherein a side wall (24) on the first slat (11) has a protruding web (45) along a side wall portion (25), and a side wall (24) on the second slat (12) has a corresponding recess (46) along a side wall portion (25).
Item 7. A conveyor system unit (10) according to any one of items 1-5, wherein the elastomeric matrix (30) has a protruding web (45) along a side wall portion (25) of a side wall (24) on the first slat (11) and has a corresponding recess (46) along a side wall portion (25) of a side wall (24) on the second slat (12).
Item 8. A conveyor system unit (10) according to any one of preceding items, wherein each conveyor system unit (10) comprises a modular system, which modular system comprises
   a slat unit (60) comprising a pair slats in form of T-shaped cross bars (11, 12), wherein each upper flat portion of the T-shaped cross bars (11, 12) forms the carrying surface (13) with a first and a second long side edge portion (21, 22) and two short side edge portions (23), wherein the pair of T-shaped cross bars (11, 12) are arranged side by side with a first long side edge portion (21) of the first T-shaped cross bar (11) facing a second long side edge portion (22) of the second T-shaped cross bar (12), wherein the pair of T-shaped cross bars (11, 12) are interconnected by an elastomeric matrix (30) extending across the carrying surfaces (13) of the pair of T-shaped cross bars (11, 12) forming a continuous carrying surface (13) of the slat unit (60) and forming a connecting portion (31) between the pair of T-shaped cross bars (11, 12), which connecting portion forms a hinged connection between the pair of T-shaped cross bars (11, 12), and wherein the elastomeric matrix (30) is fastened to the pair of T-shaped cross bars (11, 12);
   two pairs of side walls (24), which are adapted to be releasable attached to the short side edges (23) of the T-shaped cross bars (11, 12); and
   two elastomeric matrix side wall units (324), each elastomeric matrix side wall unit (324) comprising two elastomeric matrix side walls (327) adapted to cover and be releasable attached to two side walls (24) adapted to be arranged on the same side of the slat unit (60) and interconnected by a first connecting portion (311) being foldable and wedge shaped, and having an acute angle adapted to be arranged facing the carrying surface (13) of the slat unit (60), the first connecting portion (311) forming a hinged connection between the elastomeric matrix side walls (327).
Item 9. A conveyor system unit (10) according to item 8, wherein the connecting portion (31) between the long side edge portions (21, 22) of the first and second T-shaped cross bars (11, 12) comprises a second connecting portion (312), which second connecting portion (312) comprises a longitudinal extending recess (37), the longitudinal extending recess (37) forming part of the hinged connection between the pair of T-shaped cross bars (11, 12).
Item 10. A conveyor system unit (10) according to any one of items 2-9, wherein the support members (27) are arranged on the side walls (24) offset from the carrying surface (13) of the conveyor system unit (10).
Item 11. A conveyor system unit (10) according to any one of preceding items, wherein the elastomeric matrix (30) is selected from reinforced elastomeric material, rubber, polyurethane, or any other appropriate material that may withstand abrasion of the materials or goods to be carried by the conveyor system units (10).
Item 12. An endless conveyor system (50) comprising a pair of endless chains (51) and a plurality of conveyor system units (10) according to any one of preceding items, which conveyor system units (10) are arranged side by side to form an endless conveyor system (50), wherein a support member (27) on a side wall (24) on a first slat (11) of a first conveyor system unit (10) is connected to a first chain link (52) of one of the endless chain (51), and a support member (27) on a side wall (24) on a second slat (12) of the first system unit (10) is connected to a consecutive second chain link (53, 54) in the endless chain (51), and wherein a support member (27) on a side wall on a first slat (11) of a consecutive conveyor system unit (10) is connected to the second chain link (54) of the endless chain (51), and a support member (27) on a side wall on a second slat (12) of the consecutive conveyor system unit (10) is connected to a consecutive third chain link (55) in the endless chain (51).
Item 13. An endless conveyor system (50) according to item 12, wherein a longitudinal extending protruding web (41) along a long side edge portion (21) of the first conveyor system unit (10) is received in a longitudinal extending recess (42) along a long side edge portion (22) of the consecutive conveyor system unit (10), thereby forming a continuous carrying surface (13) of the endless conveyor system (50).
Item 14. An endless conveyor system (50) according to item 12 or item 13, wherein a protruding web (45) along a side wall portion (25) of a side wall (24) of the first conveyor system unit (10) is received in a corresponding recess (46) along a side wall portion (25) of a side wall (24) of the consecutive conveyor system unit (10), thereby forming a continuous wall surface of the side wall (24) of the endless conveyor system (50).
Item 15. An endless conveyor system (50) according to any one of items 12-14, wherein a load distributing plate (60) is connected to and arranged to bridge over two support members (27) arranged on a common chain link (52, 53, 54, 55).

## Claims

1. A conveyor system unit (10) configured to form part of an endless conveyor system (50), each conveyor system unit (10) comprising a pair of slats (11, 12), each slat having a carrying surface (13) with a first and a second long side edge portion (21, 22) and two short side edge portions (23), and at each short side edge portion (23) a side wall (24) is arranged, wherein
the pair of slats (11, 12) are arranged side by side with a first long side edge portion (21) of the first slat (11) facing a second long side edge portion (22) of the second slat (12), and
the pair of slats (11, 12) are interconnected by an elastomeric matrix (30) extending across the carrying surfaces (13) and opposing side walls (24) of the first and second slats (11, 12), and the elastomeric matrix (30) further comprising a connecting portion (31) extending between the pair of slats (11, 12) and side walls (24) thereby forming a continuous carrying surface (13) and side walls (24) of the conveyor system unit (10), wherein the connecting portion (31) forms a hinged connection between the pair of slats (11, 12) and side walls (24), and wherein the elastomeric matrix (30) is fastened to the pair of slats (11, 12) and to the side walls (24).

2. A conveyor system unit (10) according to claim 1, wherein each side wall (24) has a support member (27), wherein the pair of slats (11, 12) are configured to be mounted to a pair of endless chains (51) by a support member (27) of a side wall on the first slat (11) connecting to a first chain link (52) and a support member (27) of a side wall on the second slat (12) connecting to a consecutive chain link (53) in the endless chain (51).

3. A conveyor system unit (10) according to claim 1 or claim 2, wherein the connecting portion (31) comprises a first connecting portion (311) between a side wall portion (25) of a side wall (24) on the first slat (11) and an opposite side wall portion (25) of a side wall (24) on the second slat (12), wherein the first connection portion (311) being foldable and wedge shaped, and having an acute angle facing the carrying surface (13), and wherein the first connecting portion (311) forming part of the hinged connection between the pair of slats (11, 12) and side walls (24).

4. A conveyor system unit (10) according to any one of preceding claims, wherein the connecting portion (31) comprises a second connecting portion (312) between the long side edge portions (21, 22) of the first and second slats (11, 12), which second connecting portion (312) comprises a longitudinal extending recess (37), the longitudinal extending recess (37) forming part of the hinged connection between the pair of slats (11, 12) and side walls (24).

5. A conveyor system unit (10) according to any one of claims 1-4, wherein the elastomeric matrix (30) has a longitudinal extending protruding web (41) along a second long side edge portion (22) of the first slat (11), and has a corresponding longitudinal extending recess (42) along a first long side edge portion (21) of the second slat (12).

6. A conveyor system unit (10) according to any one of preceding claims, wherein a side wall (24) on the first slat (11) has a protruding web (45) along a side wall portion (25), and a side wall (24) on the second slat (12) has a corresponding recess (46) along a side wall portion (25).

7. A conveyor system unit (10) according to any one of claims 1-5, wherein the elastomeric matrix (30) has a protruding web (45) along a side wall portion (25) of a side wall (24) on the first slat (11) and has a corresponding recess (46) along a side wall portion (25) of a side wall (24) on the second slat (12).

8. A conveyor system unit (10) according to any one of preceding claims, wherein each conveyor system unit (10) comprises a modular system, which modular system comprises
a slat unit (60) comprising a pair slats in form of T-shaped cross bars (11, 12), wherein each upper flat portion of the T-shaped cross bars (11, 12) forms the carrying surface (13) with a first and a second long side edge portion (21, 22) and two short side edge portions (23), wherein the pair of T-shaped cross bars (11, 12) are arranged side by side with a first long side edge portion (21) of the first T-shaped cross bar (11) facing a second long side edge portion (22) of the second T-shaped cross bar (12), wherein the pair of T-shaped cross bars (11, 12) are interconnected by an elastomeric matrix (30) extending across the carrying surfaces (13) of the pair of T-shaped cross bars (11, 12) forming a continuous carrying surface (13) of the slat unit (60) and forming a connecting portion (31) between the pair of T-shaped cross bars (11, 12), which connecting portion forms a hinged connection between the pair of T-shaped cross bars (11, 12), and wherein the elastomeric matrix (30) is fastened to the pair of T-shaped cross bars (11, 12);
two pairs of side walls (24), which are configured to be releasable attached to the short side edges (23) of the T-shaped cross bars (11, 12); and
two elastomeric matrix side wall units (324), each elastomeric matrix side wall unit (324) comprising two elastomeric matrix side walls (327) configured to cover and be releasable attached to two side walls (24) configured to be arranged on the same side of the slat unit (60) and interconnected by a first connecting portion (311) being foldable and wedge shaped, and having an acute angle configured to be arranged facing the carrying surface (13) of the slat unit (60), the first connecting portion (311) forming a hinged connection between the elastomeric matrix side walls (327).

9. A conveyor system unit (10) according to claim 8, wherein the connecting portion (31) between the long side edge portions (21, 22) of the first and second T-shaped cross bars (11, 12) comprises a second connecting portion (312), which second connecting portion (312) comprises a longitudinal extending recess (37), the longitudinal extending recess (37) forming part of the hinged connection between the pair of T-shaped cross bars (11, 12).

10. A conveyor system unit (10) according to any one of claims 2-9, wherein the support members (27) are arranged on the side walls (24) offset from the carrying surface (13) of the conveyor system unit (10).

11. A conveyor system unit (10) according to any one of preceding claims, wherein the elastomeric matrix (30) is selected from reinforced elastomeric material, rubber, polyurethane, or any other appropriate material that may withstand abrasion of the materials or goods to be carried by the conveyor system units (10).

12. An endless conveyor system (50) comprising a pair of endless chains (51) and a plurality of conveyor system units (10) according to any one of preceding claims, which conveyor system units (10) are arranged side by side to form an endless conveyor system (50), wherein a support member (27) on a side wall (24) on a first slat (11) of a first conveyor system unit (10) is connected to a first chain link (52) of one of the endless chain (51), and a support member (27) on a side wall (24) on a second slat (12) of the first system unit (10) is connected to a consecutive second chain link (53, 54) in the endless chain (51), and wherein a support member (27) on a side wall on a first slat (11) of a consecutive conveyor system unit (10) is connected to the second chain link (54) of the endless chain (51), and a support member (27) on a side wall on a second slat (12) of the consecutive conveyor system unit (10) is connected to a consecutive third chain link (55) in the endless chain (51).

13. An endless conveyor system (50) according to claim 12, wherein a longitudinal extending protruding web (41) along a long side edge portion (21) of the first conveyor system unit (10) is received in a longitudinal extending recess (42) along a long side edge portion (22) of the consecutive conveyor system unit (10), thereby forming a continuous carrying surface (13) of the endless conveyor system (50).

14. An endless conveyor system (50) according to claim 12 or claim 13, wherein a protruding web (45) along a side wall portion (25) of a side wall (24) of the first conveyor system unit (10) is received in a corresponding recess (46) along a side wall portion (25) of a side wall (24) of the consecutive conveyor system unit (10), thereby forming a continuous wall surface of the side wall (24) of the endless conveyor system (50).

15. An endless conveyor system (50) according to any one of claims 12-14, wherein a load distributing plate (60) is connected to and arranged to bridge over two support members (27) arranged on a common chain link (52, 53, 54, 55).
